(19) Europäisches Patentamt
European Patent Office
Office européen des brevets

(11) **EP 3 966 509 B1**

(12) **EUROPEAN PATENT SPECIFICATION**

(45) Date of publication and mention
of the grant of the patent:
**27.12.2023   Bulletin 2023/52**

(21) Application number: **20728610.5**

(22) Date of filing: **07.05.2020**

(51) International Patent Classification (IPC):
**F25B 49/02** *(2006.01)*      **B60H 1/00** *(2006.01)*
**F25B 40/02** *(2006.01)*      **B60H 1/32** *(2006.01)*

(52) Cooperative Patent Classification (CPC):
**F25B 49/02; B60H 1/0073; B60H 1/3232;**
**F25B 40/02;** B60H 2001/325; B60H 2001/3257;
F25B 2700/13; F25B 2700/1931; F25B 2700/1933;
F25B 2700/2106; F25B 2700/21151;
F25B 2700/21152

(86) International application number:
**PCT/US2020/031789**

(87) International publication number:
**WO 2020/231725 (19.11.2020 Gazette 2020/47)**

(54) **SYSTEM FOR ESTIMATING CAPACITY AND METHOD FOR ESTIMATING CAPACITY OF A COOLING SYSTEM**

SYSTEM ZUR KAPAZITÄTSABSCHÄTZUNG UND VERFAHREN ZUR ABSCHÄTZUNG DER KAPAZITÄT EINES KÜHLSYSTEMS

SYSTÈME D'ESTIMATION DE LA CAPACITÉ ET MÉTHODE D'ESTIMATION DE LA CAPACITÉ D'UN SYSTÈME DE REFROIDISSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2019   US 201962846315 P**

(43) Date of publication of application:
**16.03.2022   Bulletin 2022/11**

(73) Proprietor: **Carrier Corporation**
**Palm Beach Gardens, FL 33418 (US)**

(72) Inventors:
• **SHAPIRO, Aryn**
  **Syracuse, New York 13088 (US)**
• **LU, Tony**
  **Syracuse, New York 13221 (US)**
• **WU, Wei**
  **Syracuse, New York 13057 (US)**

(74) Representative: **Dehns**
**St. Bride's House**
**10 Salisbury Square**
**London EC4Y 8JD (GB)**

(56) References cited:
**EP-A1- 3 136 013      WO-A1-2016/077559**
**JP-A- 2012 159 251     KR-A- 20070 028 154**

**Description**

BACKGROUND

The invention relates generally to refrigeration units, and more particularly to a system and to a method for estimating capacity of a cooling system.

Transport refrigeration units are used to cool cargo in a trailer or cargo compartment. The transport refrigeration units can include various systems to provide the air conditioning within the system. The cooling needs of the transport refrigeration unit may be different for the types of goods be transported. For example, dry goods may have a different setpoint than perishable goods. In addition, other factors such as the duration of the trip may impact the setpoints determined for transporting the good. There may be a need to optimize the efficiency of the refrigeration system during transport.

EP 3 136 013 A1 relates to heat pump chilling systems equipped with a plurality of heat pump chilling devices and methods of controlling the heat pump chilling systems. This includes an operating-capacity calculating unit that calculates an operating capacity indicating the capacity for heating or cooling based on the inlet temperature and the outlet temperature.

WO 2016/077559 A1 discloses a method of controlling operation of an air conditioning system that includes measuring a compressor speed of one or more chillers of an air conditioning system and measuring a refrigerant pressure of the one or more chillers of the air conditioning system. A chiller load is calculated using the compressor speed and the refrigerant pressure.

KR 2007 0028154 A discloses an operating method for an air conditioner which involves: a test operation step where the air conditioner is operated with a target pressure at the compressor inlet, an evaporation temperature measuring step where the evaporator temperature is measured at its inlet, and a target pressure resetting step of resetting a preset target pressure based on the measured evaporation temperature.

JP 2012 159251 A discloses a refrigeration cycle device with a flow rate calculation means, a flow rate calculation method and a program for calculating the flow rate of a fluid flowing through a heat exchanger.

BRIEF DESCRIPTION

According to a first aspect of the present invention, a system for estimating capacity, as defined by appended independent claim 1, is provided. According to the configuration of the controller of the inventive system, the capacity is estimated by averaging the computed capacity over a duty cycle associated with the effective state of a valve which is proportional to the flow rate of the cooling refrigerant in the cooling system.

Optionally, embodiments include one or more sensors including temperature sensors, pressure sensors, or mass flow rate sensors.

Optionally, embodiments include one or more measurements for inlet and outlet temperature measurements at the compressor of the cooling system.

Optionally, embodiments include one or more measurements for inlet and outlet pressure measurements at the compressor the cooling system.

Optionally, embodiments include one or more parameters of the cooling system for a subcooling function of a refrigerant used in the cooling system.

Optionally, embodiments include a subcooling function that is based at least in part on outside air temperature and a valve position of valve of the cooling system.

Optionally, embodiments include a controller that is configured to perform calibration of the average computed cooling capacity.

Optionally, embodiments include a controller that is configured to determine calibration estimations for known valve positions and outside air temperatures (OAT) from simulation or experimentation.

Optionally, embodiments include a subcooling function that is estimated based at least in part on the OAT and valve position.

According to a second aspect of the present invention, a method for estimating capacity of a cooling system is provided as defined by appended independent claim 10. As part of this method, the capacity is estimated by averaging the computed capacity over a duty cycle associated with the effective state of a valve which is proportional to the flow rate of the cooling refrigerant in the cooling system.

Optionally, embodiments include one or more sensors including temperature sensors, pressure sensors, or mass flow rate sensors.

Optionally, embodiments include one or more measurements for inlet and outlet temperature measurements at the compressor of the cooling system.

Optionally, embodiments include one or more measurements for inlet and outlet pressure measurements at the compressor the cooling system.

Optionally, embodiments include one or more parameters of the cooling system for a subcooling function of a refrigerant used in the cooling system.

Optionally, embodiments include a subcooling function that is based at least in part on outside air temperature and a valve position of valve of the cooling system.

Optionally, embodiments include performing calibration of the average computed cooling capacity.

Optionally, embodiments include determining calibration estimations for known valve positions and outside air temperatures (OAT) from simulation or experimentation.

Optionally, embodiments include estimating the subcooling function based at least in part on the OAT and valve position.

These features and elements as well as the operation thereof will become more apparent in light of the following description and the accompanying drawings. It should be understood, however, that the following description and drawings are intended to be illustrative and explanatory in nature and non-limiting.

BRIEF DESCRIPTION OF THE DRAWINGS

The foregoing and other features and advantages of embodiments are apparent from the following detailed description taken in conjunction with the accompanying drawings in which:

FIG. 1 depicts a system having a transport refrigeration unit and a cargo compartment;
FIG. 2 depicts a transport refrigeration unit for a cargo compartment of the system of FIG. 1;
FIG. 3 depicts a flowchart of a method for estimating a cooling capacity of a cooling; and
FIG. 4 depicts another flowchart of a method for estimating a cooling capacity of a cooling.

DETAILED DESCRIPTION

The techniques described herein provide the capability for performing an online cooling capacity estimation for a refrigeration unit. The cooling capacity indicates the refrigeration unit's ability to remove heat from a given space. The cooling load provides the amount of heat energy needed to be removed from a given space to maintain the temperature within an acceptable range. The cooling capacity estimation can be used for both system control and system diagnostics to determine how efficiently the load is being managed.

Various types of goods can require different cooling temperature needs to ensure the integrity of the goods during transport. The harm caused to the goods can be increased based on the length of the trip, ambient temperature, efficiency of the system, and other factors. For example, perishable food items may be able to withstand warmer temperatures for a short trip. However, if the duration of the trip is long enough, the perishable items may not be able to withstand the damage caused by inadequate cooling.

Although the temperature setpoint can simply be changed to a higher or lower temperature setpoint, without knowing the load, the appropriate setpoint may not be able to be determined. That is, an operator may not know exactly how much higher or lower to adjust the setpoint without knowing the load.

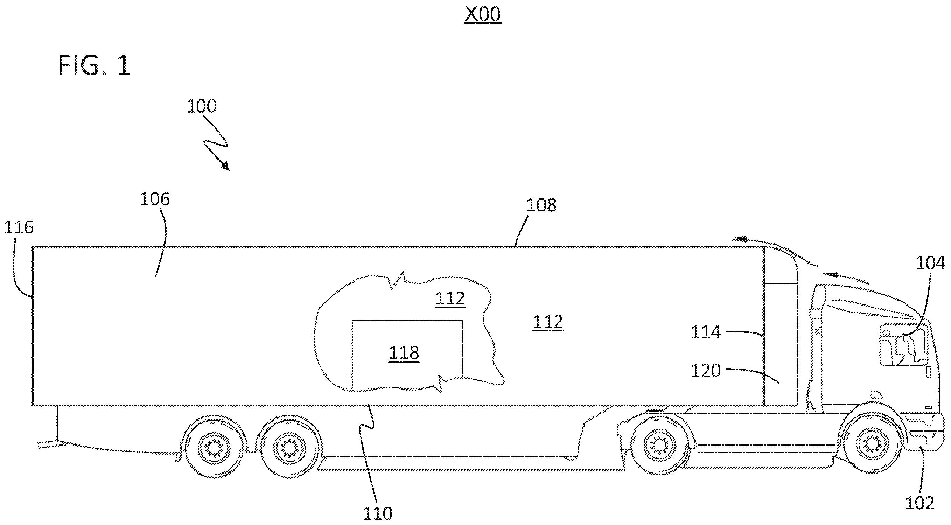

Shown in FIG. 1 is an embodiment of a tractor trailer system 100. Although a cargo compartment for a tractor trailer system is shown in FIG. 1, the cargo compartment can be used in any type of vehicle used for transporting goods including aircraft and ships. The tractor trailer system 100 includes a tractor 102 including an operator's compartment or cab 104 and also including an engine, which acts as the drive system of the tractor trailer system 100. A trailer 106 is coupled to the tractor 102. The trailer 106 is a refrigerated trailer 106 and includes a top wall 108, a directly opposed bottom wall 110, opposed side walls 112, and a front wall 114, with the front wall 114 being closest to the tractor 102. The trailer 106 further includes a door or doors (not shown) at a rear wall 116, opposite the front wall 114. The walls of the trailer 106 define a cargo compartment. The trailer 106 is configured to maintain a cargo 118 located inside the cargo compartment at a selected temperature through the use of a transport refrigeration unit 120 located on the trailer 106. The transport refrigeration unit 120, as shown in FIG. 1, is located at or attached to the front wall 114.

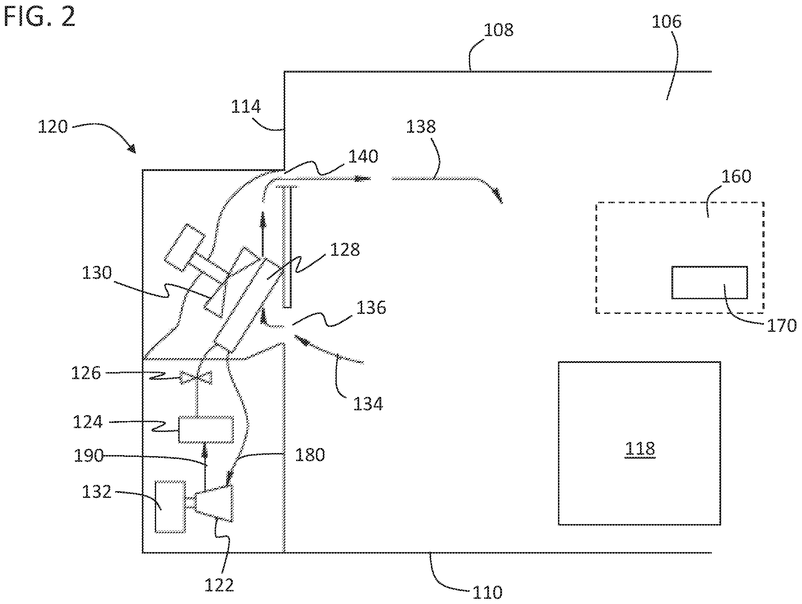

Referring now to FIG. 2, the transport refrigeration unit 120 is shown in more detail. The transport refrigeration unit 120 includes a compressor 122, a condenser 124, an expansion valve 126, an evaporator 128, and an evaporator fan 130. The compressor 122 is operably connected to a AC power source 132 which drives the compressor 122. Airflow is circulated into and through the cargo compartment of the trailer 106 by means of the transport refrigeration unit 120. A return airflow 134 flows into the transport refrigeration unit 120 from the cargo compartment of the trailer 106 through a refrigeration unit inlet 136, and across the evaporator 128 via the evaporator fan 130, thus cooling the return airflow 134. The cooled return airflow 134, now referred to as supply airflow 138, is supplied into the cargo compartment of the trailer 106 through a refrigeration unit outlet 140, which in some embodiments is located near the top wall 108 of the trailer 106. The supply airflow 138 cools the cargo 118 in the cargo compartment of the trailer 106. A controller 160 controls various aspects of the transport refrigeration unit 120 and the transport refrigeration unit power system. The controller 160 can control the compressor 122, the condenser 124, condenser fan (not shown), the expansion valve 126, the evaporator 128, and the evaporator fan 130 in addiction to other equipment or sensors. The controller 160 can be connected to the equipment over a wired or wireless connection (connections not shown). The controller 160 also includes a cooling capacity computation module 170 which is used to perform various estimations and calculations of the refrigeration system of the transport refrigeration unit 120 to determine a state of operation. The cooling capacity can be determined using sensors such as the inlet, outlet pressure/temperature using sensors 180, 190.

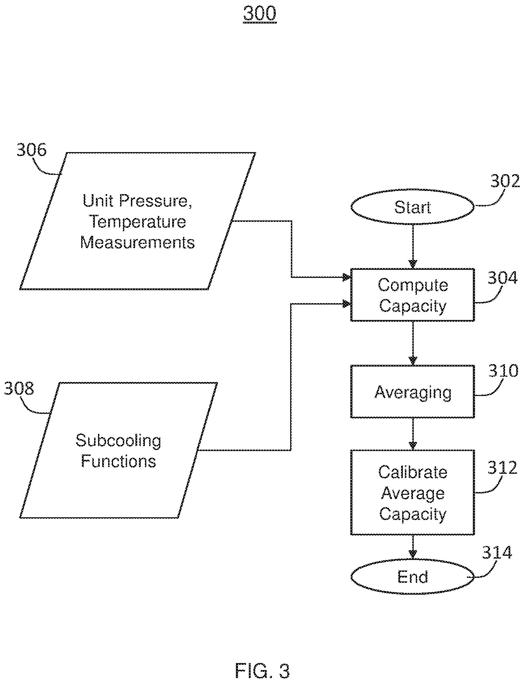

FIG. 3 depicts a high-level flowchart of a method 300 for performing real-time online capacity estimation of a refrigeration system. The method 300 begins at block 302 and proceeds to block 304 to compute cooling capacity for the cooling system. The unit pressure/temperature measurements are obtained at block 306 and the subcooling function for a refrigerant in the cooling system is obtained at block 308. The data is provided to block 304 to compute the cooling capacity. In one or more embodiments, the cooling capacity can be determined based on the following Equation:

$$CoolingCap\_Ref = DUV * Flow\ Rate * (hout\_evap - hin\_evap) * Calibration\ Factor;$$

where DUV - digital valve; flow rate - mass flow rate at the compressor; hout_evap is a function of outlet temperature and pressure; hin_evap is a function of inlet temperature and pressure; calibration factor accounts for a margin of error that may be introduced in the computation.

In some embodiments, the pressure and temperature measurements can be obtained and using interpolation the mass flow rate can be calculated using some assumptions using prior data (subcooling temperature and real-time measurements). In addition, because system models and assumptions are used during the estimation some errors may have been introduced into the computation. A calibration factor can be used to compensate for deviations in the calculations.

At block 310, the computed capacities are averaged over a period of time as set out by the independent claims. In one or more embodiments, the averaged computed capacities can be calibrated to remove error from the result at block 312 to estimate the cooling capacity of the system. The method 300 ends at block 314.

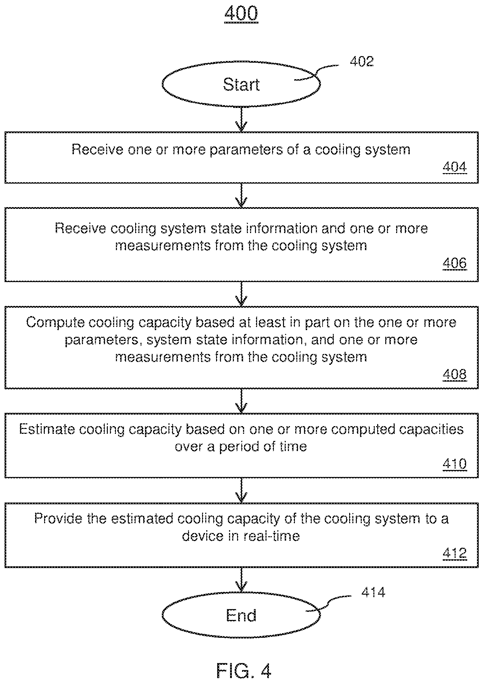

Now referring to FIG. 4, another flowchart of a method 400 for estimating cooling capacity is shown. The method 400 starts at block 402 and proceeds to block 404 which provides for receiving one or more parameters of a cooling system. In one or more embodiments the one or more parameters can include a subcooling function or a calibration factor that has been determined from experimentation or simulation.

The block 406 the method 400 provides for receiving system state information and measurements from the cooling system. The one or more measurements can include the temperature and pressure measurements that are taken at various points in the cooling system. The measurements can be taken at the inlet and outlet of the compressor and used for calculating and estimating various information of the cooling system. That is, the suction and discharge temperatures and pressures are measured. In addition, the effective position of the valve can be determined from the system to control the flow rate of the refrigerant in the cooling system.

At block 408, the method 400 provides for computing cooling capacity based at least in part on the one or more parameters, the system state information, and the one or more measurements. In one or more embodiments, the capacity is estimated by averaging the computed capacity over a duty cycle associated with the effective state of a valve which is proportional to the flow rate of the cooling refrigerant in the cooling system. The average is taken over the duty cycle (PWM period) to estimate the capacity and improve accuracy by reducing the capacity variation that occurs over the PWM period. It should be understood, the techniques described herein can be applied to systems that do not use PWM, such as those systems that use steppers or variable-frequency drives (VFDs). In this scenario, the averaging step may be unnecessary.

The 400 at block 410 provides estimating a cooling capacity based on one or more computed capacities over a period of time and the estimated cooling capacity can be provided at shown in block 412 as an input to one or more devices used by an operator or administrator to monitor the cooling system. In other embodiments, the estimated capacity can be provided to other systems that can leverage the estimated capacity to perform load estimations, implement enhanced cargo area control, perform diagnostics, cargo profiling and more. The method 400 ends at block 414. It should be understood that the capacity estimation for the cooling system is not limited by the steps provided in FIG. 4 and different steps and sequence of steps can be performed to determine the capacity of the system.

Various methodologies can be used to perform a cross-check or validation of the capacity determined by the different methodologies. That is, the different techniques to devise system state estimations can be correlated to determine both accuracy and also for diagnostic purposes. One of the techniques described herein provides a capacity estimation that involves the user of refrigerant sensors and system state information, but the scope is not intended to be limited by this embodiment. Online estimation of cooling capacity can be used for load estimation, enhanced cargo area control, diagnostics, cost reduction, cargo profiling, and others.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the example embodiments can be modified to incorporate any number of variations, alterations, substitutions, combinations, subcombinations, or equivalent arrangements not heretofore described, but which are commensurate with the scope of the present invention, as defined in the appended claims. Additionally, while various embodiments of the present invention have been described, it is to be understood that aspects of the present invention may include only some of the described embodiments. Accordingly, the present invention is not to be seen as limited by the foregoing description, but is only limited by the scope of the appended claims.

## Claims

1. A system for estimating capacity, the system comprising;

   one or more sensors (180, 190);
   compressor (122) coupled to one or more sensors (180, 190);
   a controller (160) configured to:

   (404) receive one or more parameters of a cooling system;
   (406) receive system state information and measurements from the cooling system;
   (408) compute a cooling capacity based at least in part on the one or more parameters, one or more measurements and the system state information;
   (410) estimate cooling capacity based on computed capacity over a period of time; and
   (412) provide the estimated capacity of the cooling system to a device in real-time;
   **characterised in that** the capacity is estimated by averaging the computed capacity over a duty cycle associated with the effective state of a valve which is proportional to the flow rate of the cooling refrigerant in the cooling system.

2. The system of claim 1, wherein the one or more sensors (180, 190) comprise temperature sensors, pressure sensors, or mass flow rate sensors.

3. The system of claim 1, wherein the one or more measurements comprise inlet and outlet temperature measurements at the compressor (122) of the cooling system.

4. The system of claim 1, wherein the one or more measurements comprise inlet and outlet pressure measurements at the compressor (122) the cooling system.

5. The system of claim 1, wherein the one or more parameters of the cooling system comprises a subcooling function of a refrigerant used in the cooling system.

**6.** The system of claim 5, wherein the subcooling function is based at least in part on outside air temperature and a valve position of valve of the cooling system.

**7.** The system of claim 6, wherein the controller (160) is configured to (312) perform calibration of the average computed cooling capacity.

**8.** The system of claim 7, wherein the controller (160) is configured to determine calibration estimations for known valve positions and outside air temperatures (OAT) from simulation or experimentation.

**9.** The system of claim 8, wherein the subcooling function is estimated based at least in part on the OAT and valve position.

**10.** A method for estimating capacity of a cooling system, the method comprising:

> (404) receiving one or more parameters of a cooling system;
> (406) receiving system state information and measurements from the cooling system;
> (408) computing cooling capacity based at least in part on the one or more parameters, one or more measurements and the system state information;
> (410) estimating cooling capacity based on computed capacities over a period of time; and
> (412) provide the estimated cooling capacity of the cooling system to a device in real-time;
> **characterised in that** the capacity is estimated by averaging the computed capacity over a duty cycle associated with the effective state of a valve which is proportional to the flow rate of the cooling refrigerant in the cooling system.

**11.** The method of claim 10, wherein one or more sensors (180, 190) of the cooling system comprise temperature sensors, pressure sensors, or mass flow rate sensors.

**12.** The method of claim 10, wherein the one or more measurements comprise inlet and outlet temperature measurements at a compressor (122) of the cooling system.

**13.** The method of claim 10, wherein the one or more measurements comprise inlet and outlet pressure measurements at a compressor (122) of the cooling system.

**14.** The method of claim 10, wherein the one or more parameters of the cooling system comprises a subcooling function of a refrigerant used in the cooling system.

**Patentansprüche**

**1.** System zur Kapazitätsabschätzung, wobei das System Folgendes umfasst:

> einen oder mehrere Sensoren (180, 190);
> Verdichter (122), gekoppelt mit einem oder mehreren Sensoren (180, 190);
> eine Steuerung (160), die für Folgendes konfiguriert ist:
>
> > (404) Empfangen eines oder mehrerer Parameter eines Kühlsystems; (406) Empfangen von Systemzustandsinformationen und -messungen von dem Kühlsystem;
> > (408) Berechnen einer Kühlkapazität mindestens teilweise basierend auf dem einen oder den mehreren Parametern, einer oder mehreren Messungen und den Systemzustandsinformationen;
> > (410) Abschätzen der Kühlkapazität basierend auf der berechneten Kapazität über einen Zeitraum; und
> > (412) Bereitstellen der abgeschätzten Kapazität des Kühlsystems für eine Vorrichtung in Echtzeit;
> > **dadurch gekennzeichnet, dass** die Kapazität durch Mittelung der berechneten Kapazität über einen Arbeitszyklus abgeschätzt wird, der dem effektiven Zustand eines Ventils zugeordnet ist, der proportional zu dem Durchsatz des Kühlmittels in dem Kühlsystem ist.

**2.** System nach Anspruch 1, wobei der eine oder die mehreren Sensoren (180, 190) Temperatursensoren, Drucksensoren oder Massendurchflusssensoren umfassen.

**3.** System nach Anspruch 1, wobei die eine oder mehreren Messungen Einlass- und Auslass-Temperaturmessungen an dem Verdichter (122) des Kühlsystems umfassen.

**4.** System nach Anspruch 1, wobei die eine oder mehreren Messungen Einlass- und Auslass-Druckmessungen an dem Verdichter (122) des Kühlsystems umfassen.

**5.** System nach Anspruch 1, wobei der eine oder die mehreren Parameter des Kühlsystems eine Unterkühlungsfunktion eines in dem Kühlsystem verwendeten Kältemittels umfassen.

**6.** System nach Anspruch 5, wobei die Unterkühlungsfunktion mindestens teilweise auf der Außenlufttemperatur und einer Ventilposition des Ventils des Kühlsystems basiert.

**7.** System nach Anspruch 6, wobei die Steuerung (160) konfiguriert ist, um (312) eine Kalibrierung der durchschnittlichen berechneten Kühlkapazität durchzuführen.

**8.** System nach Anspruch 7, wobei die Steuerung (160) konfiguriert ist, um Kalibrierungsabschätzungen für bekannte Ventilpositionen und Außenlufttemperaturen (OAT) aus Simulation oder Versuch zu bestimmen.

**9.** System nach Anspruch 8, wobei die Unterkühlungsfunktion mindestens teilweise basierend auf der OAT und der Ventilposition abgeschätzt wird.

**10.** Verfahren zum Abschätzen der Kapazität eines Kühlsystems, wobei das Verfahren Folgendes umfasst:

(404) Empfangen eines oder mehrerer Parameter eines Kühlsystems;
(406) Empfangen von Systemzustandsinformationen und -messungen von dem Kühlsystem;
(408) Berechnen einer Kühlkapazität mindestens teilweise basierend auf dem einen oder den mehreren Parametern, einer oder mehreren Messungen und den Systemzustandsinformationen;
(410) Abschätzen der Kühlkapazität basierend auf den berechneten Kapazitäten über einen Zeitraum; und
(412) Bereitstellen der abgeschätzten Kühlkapazität des Kühlsystems für eine Vorrichtung in Echtzeit;
**dadurch gekennzeichnet, dass** die Kapazität durch Mittelung der berechneten Kapazität über einen Arbeitszyklus abgeschätzt wird, der dem effektiven Zustand eines Ventils zugeordnet ist, der proportional zu dem Durchsatz des Kühlmittels in dem Kühlsystem ist.

**11.** Verfahren nach Anspruch 10, wobei eine oder mehrere Sensoren (180, 190) des Kühlsystems Temperatursensoren, Drucksensoren oder Massendurchflusssensoren umfassen.

**12.** Verfahren nach Anspruch 10, wobei die eine oder mehreren Messungen Einlass- und Auslass-Temperaturmessungen an einem Verdichter (122) des Kühlsystems umfassen.

**13.** Verfahren nach Anspruch 10, wobei die eine oder mehreren Messungen Einlass- und Auslass-Druckmessungen an dem Verdichter (122) des Kühlsystems umfassen.

**14.** Verfahren nach Anspruch 10, wobei der eine oder die mehreren Parameter des Kühlsystems eine Unterkühlungsfunktion eines in dem Kühlsystem verwendeten Kältemittels umfassen.

**Revendications**

**1.** Système d'estimation de la capacité, le système comprenant :

un ou plusieurs capteurs (180, 190) ;
un compresseur (122) couplé à un ou plusieurs capteurs (180, 190) ;
un dispositif de commande (160) configuré pour :

(404) recevoir un ou plusieurs paramètres d'un système de refroidissement ;
(406) recevoir des informations d'état de système et des mesures provenant du système de refroidissement ;
(408) calculer une capacité de refroidissement sur la base, au moins en partie, des un ou plusieurs paramètres, des une ou de plusieurs mesures et des informations d'état de système ;

(410) estimer la capacité de refroidissement sur la base de la capacité calculée sur une période de temps ; et
(412) fournir la capacité estimée du système de refroidissement à un dispositif en temps réel ;
**caractérisé en ce que** la capacité est estimée en faisant la moyenne de la capacité calculée sur un cycle de service associé à l'état effectif d'une vanne qui est proportionnelle au débit du fluide frigorigène de refroidissement dans le système de refroidissement.

2. Système selon la revendication 1, dans lequel les un ou plusieurs capteurs (180, 190) comprennent des capteurs de température, des capteurs de pression ou des capteurs de débit massique.

3. Système selon la revendication 1, dans lequel les une ou plusieurs mesures comprennent des mesures de température d'entrée et de sortie au niveau du compresseur (122) du système de refroidissement.

4. Système selon la revendication 1, dans lequel les une ou plusieurs mesures comprennent des mesures de pression d'entrée et de sortie au niveau du compresseur (122) du système de refroidissement.

5. Système selon la revendication 1, dans lequel les un ou plusieurs paramètres du système de refroidissement comprennent une fonction de sous-refroidissement d'un fluide frigorigène utilisé dans le système de refroidissement.

6. Système selon la revendication 5, dans lequel la fonction de sous-refroidissement est basée au moins en partie sur la température de l'air extérieur et une position de vanne du système de refroidissement.

7. Système selon la revendication 6, dans lequel le dispositif de commande (160) est configuré pour (312) effectuer un étalonnage de la capacité de refroidissement moyenne calculée.

8. Système selon la revendication 7, dans lequel le dispositif de commande (160) est configuré pour déterminer des estimations d'étalonnage pour des positions de vanne connues et des températures de l'air extérieur (OAT) à partir de simulations ou d'expérimentations.

9. Système selon la revendication 8, dans lequel la fonction de sous-refroidissement est estimée au moins en partie sur la base de l'OAT et de la position de vanne.

10. Procédé d'estimation de la capacité d'un système de refroidissement, le procédé comprenant :

   (404) la réception d'un ou de plusieurs paramètres d'un système de refroidissement ;
   (406) la réception d'informations d'état de système et de mesures provenant du système de refroidissement ;
   (408) le calcul d'une capacité de refroidissement sur la base, au moins en partie, des un ou plusieurs paramètres, des une ou plusieurs mesures et des informations d'état de système ;
   (410) l'estimation de la capacité de refroidissement sur la base des capacités calculées sur une période de temps ; et
   (412) la fourniture de la capacité de refroidissement estimée du système de refroidissement à un dispositif en temps réel ;
   **caractérisé en ce que** la capacité est estimée en faisant la moyenne de la capacité calculée sur un cycle de service associé à l'état effectif d'une vanne qui est proportionnelle au débit du fluide frigorigène de refroidissement dans le système de refroidissement.

11. Procédé selon la revendication 10, dans lequel un ou plusieurs capteurs (180, 190) du système de refroidissement comprennent des capteurs de température, des capteurs de pression ou des capteurs de débit massique.

12. Procédé selon la revendication 10, dans lequel les une ou plusieurs mesures comprennent des mesures de température d'entrée et de sortie au niveau d'un compresseur (122) du système de refroidissement.

13. Procédé selon la revendication 10, dans lequel les une ou plusieurs mesures comprennent des mesures de pression d'entrée et de sortie au niveau d'un compresseur (122) du système de refroidissement.

14. Procédé selon la revendication 10, dans lequel les un ou plusieurs paramètres du système de refroidissement comprennent une fonction de sous-refroidissement d'un fluide frigorigène utilisé dans le système de refroidissement.

FIG. 1

EP 3 966 509 B1

FIG. 2

FIG. 3

## 400

```
                    ┌─────────────┐
                    │    Start    │──── 402
                    └──────┬──────┘
                           │
                           ▼
┌──────────────────────────────────────────────────────┐
│   Receive one or more parameters of a cooling system   │
│                                                    404 │
└──────────────────────────┬─────────────────────────────┘
                           │
                           ▼
┌──────────────────────────────────────────────────────┐
│  Receive cooling system state information and one or more │
│        measurements from the cooling system            │
│                                                    406 │
└──────────────────────────┬─────────────────────────────┘
                           │
                           ▼
┌──────────────────────────────────────────────────────┐
│ Compute cooling capacity based at least in part on the one or more │
│      parameters, system state information, and one or more         │
│           measurements from the cooling system                     │
│                                                    408 │
└──────────────────────────┬─────────────────────────────┘
                           │
                           ▼
┌──────────────────────────────────────────────────────┐
│ Estimate cooling capacity based on one or more computed capacities │
│                 over a period of time                  │
│                                                    410 │
└──────────────────────────┬─────────────────────────────┘
                           │
                           ▼
┌──────────────────────────────────────────────────────┐
│  Provide the estimated cooling capacity of the cooling system to a │
│                   device in real-time                  │
│                                                    412 │
└──────────────────────────┬─────────────────────────────┘
                           │
                           ▼
                    ┌─────────────┐
                    │     End     │──── 414
                    └─────────────┘
```

FIG. 4

**EP 3 966 509 B1**

**REFERENCES CITED IN THE DESCRIPTION**

**Patent documents cited in the description**

- EP 3136013 A1
- WO 2016077559 A1
- KR 20070028154 A
- JP 2012159251 A